# FASCICULE DE BREVET EUROPEEN

(11) **EP 0 609 390 B1**
(45) Date de publication et mention de la délivrance du brevet: **20.12.1995**
(21) Numéro de dépôt: 92923832.7
(22) Date de dépôt: 14.10.1992
(51) Int. Cl.: F16D 43/09, F16H 61/02

(54) **PROCEDE DE COMMANDE D'EMBRAYAGE AUTOMATIQUE ET DISPOSITIF DE TRANSMISSION AUTOMATIQUE S'Y RAPPORTANT**
VERFAHREN ZUR STEUERUNG EINER AUTOMATISCHEN KUPPLUNG UND DAZUGEHÖRIGES AUTOMATISCHES GETRIEBE
AUTOMATIC CLUTCH CONTROL METHOD AND ASSOCIATED AUTOMATIC TRANSMISSION DEVICE

(30) Priorité: 18.10.1991 FR 9112887
(43) Date de publication de la demande: 10.08.1994
(60) Demande divisionnaire: 95108901.0
(73) Titulaire: ANTONOV AUTOMOTIVE TECHNOLOGIES B.V., 3013 AL Rotterdam (NL)
(72) Inventeur: ANTONOV, Roumen, F-75008 Paris (FR)
(74) Mandataire: Pontet, Bernard
(86) Numéro de dépôt international: FR9200966
(87) Numéro de publication internationale: WO9308411

(56) Documents cités:
- WO-A-91/13275
- FR-A- 637 609
- FR-A- 1 098 801
- FR-A- 1 152 768
- FR-A- 1 203 686
- FR-A- 2 531 166
- US-A- 5 033 598

## Description

La présente invention concerne un procédé de commande d'un embrayage automatique, par exemple un embrayage du type commandant un changement de rapport dans un dispositif de transmission automatique, notamment pour véhicule motorisé terrestre.

La présente invention concerne également un dispositif de transmission automatique faisant application d'un tel procédé.

Dans les dispositifs de transmission automatique, on utilise fréquemment des embrayages, notamment de type multidisques à bain d'huile, qui sont commandés par des moyens de serrage. Selon que l'embrayage est serré ou non par les moyens de serrage, une combinaison d'engrenages, telle qu'un train hépicycloïdal, fonctionne selon un premier rapport de transmission ou selon un second rapport de transmission.

Dans les transmissions automatiques classiques, les moyens de serrage sont des vérins qui font brusquement passer l'embrayage de l'état serré à l'état de désaccouplement total. Ceci permet des commandes rapides mais nécessite une hydraulique de puissance complexe, commandée par un circuit de pilotage hydraulique ou électronique, fonctionnant avec divers capteurs.

Les demandes de brevet français 90 06438 et 90 12901, toutes deux non publiées, montrent l'intérêt des transmissions dans lesquelles au moins un embrayage est actionné par une force qui est directement produite à l'intérieur de la transmission et qui a une valeur qui, au moins dans certains cas de fonctionnement, est une fonction monotone d'un paramètre déterminant pour le choix du rapport de transmission, par exemple la vitesse de rotation d'un composant de la boîte de vitesses ou encore le couple transmis par un composant de la boîte de vitesses.

Avec de tels moyens de serrage, l'embrayage est plus ou moins serré selon les conditions de fonctionnement. Le changement de rapport s'effectue lorsque, à partir d'un état d'adhérence, l'embrayage se met à patiner car il n'est plus capable de transmettre le couple qui est nécessaire pour maintenir ses deux éléments à la même vitesse, ou au contraire lorsque, à partir d'un état de patinage, l'embrayage passe en état d'adhérence car la force de serrage qui lui est appliquée est devenue suffisante pour que les forces de frottement entre les disques produisent ledit couple.

De tels embrayages automatiques permettent de supprimer la très complexe et très coûteuse hydraulique de commande et de puissance que l'on trouve dans les boîtes de vitesses automatiques traditionnelles.

Cependant, les systèmes à friction ont la propriété, dans certains états de serrage intermédiaire, de conserver leur état, que ce soit l'état d'adhérence ou l'état de patinage. Cette propriété est d'ailleurs favorable dans l'application aux transmissions automatiques, pour éviter les changements de rapport trop fréquents.

Mais cette tendance au maintien de l'état existant peut introduire une certaine lenteur dans les changements de rapport.

D'autre part, on peut souhaiter, dans certaines situations, un changement de rapport alors que le fonctionnement normal spontané de l'embrayage conduirait au maintien du rapport en service.

On connaît certes d'après le US-A-5 033 598 un dispositif hydraulique qui neutralise sélectivement une partie des masselottes centrifuges commandant un embrayage, de manière à modifier sélectivement le comportement de l'embrayage pour une vitesse de rotation donnée. Il s'agit dans ce document d'un embrayage de démarrage dont on neutralise une partie des masselottes pendant la phase de démarrage d'un véhicule, pour rendre le démarrage plus progressif.

Le but de l'invention est de proposer un procédé et une transmission permettant d'initier de manière très rapide des changements d'état de l'embrayage et respectivement des changements de rapport dans la transmission.

Suivant un premier aspect de l'invention, le procédé de commande pour initier un changement d'état entre un état de patinage et un état d'adhérence dans un embrayage commandé automatiquement par des moyens de serrage appliquant un effort de serrage variable en fonction d'au moins un paramètre est caractérisé en ce qu'on modifie passagèrement l'effort de serrage variable appliqué à l'embrayage, en lui appliquant en outre une brève impulsion de force dans un sens correspondant audit changement d'état, de façon à initier un changement durable dudit état de l'embrayage.

Comme, dans une certaine plage de forces de serrage pour un couple à transmettre donné, l'embrayage tend à conserver son état de patinage ou d'adhérence quel qu'il soit, l'impulsion de force précitée, même si sa durée est très limitée, suffit à effectuer le changement d'état, après quoi le nouvel état sera également conservé, même après disparition de la force impulsionnelle.

Ce procédé peut être mis en oeuvre pour initier et accélérer un processus de changement de rapport dans une transmission automatique, notamment pour véhicule terrestre.

On peut ainsi, par exemple, provoquer très rapidement un changement de rapport lorsque le conducteur du véhicule réclame la pleine puissance du moteur.

Selon un second aspect de l'invention, le dispositif de transmission à changement de rapport automatique à au moins deux rapports de transmission, comprenant un embrayage d'accouplement faisant fonctionner le dispositif de transmission avec un rapport de transmission différent selon que l'embrayage d'accouplement est dans un état de patinage et respectivement dans un état d'adhérence, et des moyens de serrage appliquant à l'embrayage un effort de serrage variable en fonction d'un paramètre pour commander l'embrayage entre l'état de patinage et l'état d'adhérence, de façon à changer le rapport de transmission lorsque le paramètre franchit une plage de valeurs, est caractérisé par des moyens initiateurs pour sélectivement modifier l'effort de serrage variable appliqué à l'embrayage en lui impartissant en outre une brève impulsion de force dans un sens déterminé pour initier un changement durable d'état de l'embrayage entre l'état de patinage et l'état d'adhérence.

D'autres particularités et avantages de l'invention ressortiront encore de la description ci-après, relative à des exemples non limitatifs.

Aux dessins annexés :
- la figure 1 est une vue en coupe axiale d'une transmission à embrayage multidisques conforme à l'invention ;
- les figures 2, 4 et 5 sont des vues analogues à la figure 1 mais relatives à trois autres modes de réalisation de la transmission ; et
- la figure 3 montre un détail de la réalisation de la figure 2, vu parallèlement à l'axe de la transmission.

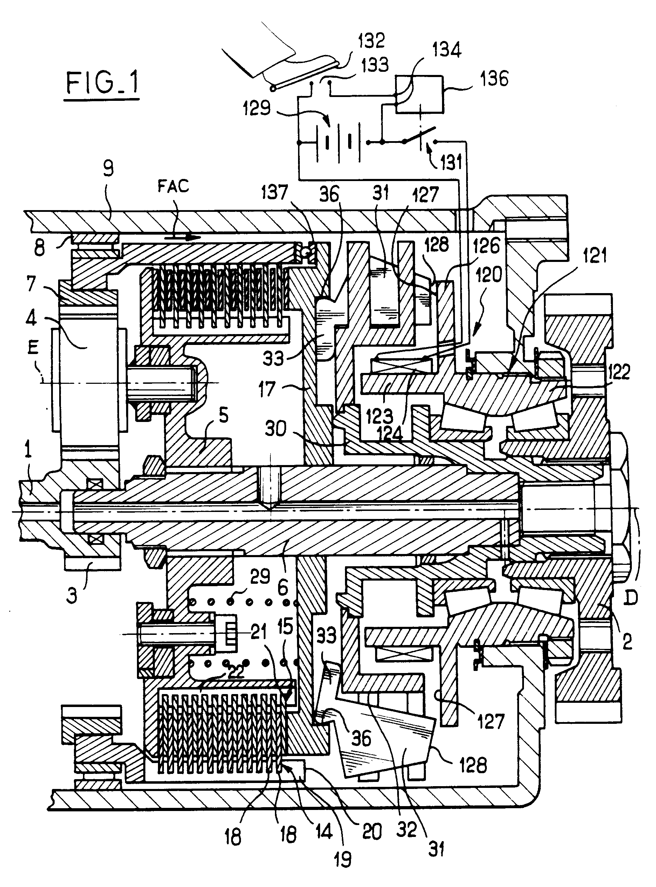

La transmission à changement de rapport automatique représentée à la figure 1 comprend, dans un boîtier 9, une combinaison d'engrenages définissant des rapports de transmission différents entre un arbre d'entrée 1 pouvant être relié au moins indirectement à une source de puissance telle qu'un moteur de véhicule, et une sortie 2 pouvant être accouplée à des roues motrices d'un véhicule par l'intermédiaire d'autres moyens de transmission non représentés.

Dans l'exemple représenté à la figure 1, la combinaison d'engrenages comprend un train planétaire encore appelé train épicycloïdal-. Un pignon planétaire 3 est lié rigidement à l'arbre d'entrée 1 de façon à être entraîné en rotation par celui-ci. Le planétaire 3 engrène avec des satellites 4 montés libres en rotation sur un porte-satellites 5. Ce dernier est solidaire d'un arbre central 6 relié à la sortie 2 et ayant même axe de rotation D que l'arbre d'entrée 1. On peut par exemple prévoir trois satellites 4 (dont un seul est représenté à la figure 1) montés pivotants selon trois axes E répartis autour de l'axe D.

La denture des satellites 4 engrène en outre avec la denture intérieure d'une couronne 7, également centrée et mobile en rotation autour de l'axe D.

De façon connue, le rapport de transmission entre l'entrée 1 et la sortie 2 dépend des couplages mécaniques qui s'exercent entre les éléments rotatifs (planétaire 3, porte-satellites 5 et couronne 7) du train planétaire. Dans l'exemple représenté, ces couplages mécaniques sont appliqués sélectivement entre le porte-satellites 5 et la couronne 7. Une roue libre 8, montée entre le boîtier fixe 9 de la transmission et le bord extérieur de la couronne 7, empêche la couronne 7 de tourner en sens inverse de l'arbre d'entrée 1.

Un embrayage multidisques est monté entre la couronne 7 et le porte-satellites 5 pour assurer le couplage sélectif entre ces deux éléments rotatifs. Cet embrayage comprend un empilement de disques 14, 15 axialement coulissants.

Des premiers disques 14 de l'empilement sont liés en rotation à la couronne 7. A cet effet, ces disques 14 présentent sur leur bord extérieur des dents extérieures 18 reçues dans des cannelures intérieures 19 de la couronne 7 parallèles à l'axe D. Ces cannelures 19 sont à fond ouvert. Elles sont définies entre des doigts 20 faisant partie de la couronne 7.

Des seconds disques 15 de l'empilement, qui alternent avec les premiers disques 14, sont liés en rotation au porte-satellites 5. A cet effet, ces seconds disques 15 présentent sur leur bord intérieur des dents intérieures 21 reçues dans des cannelures extérieures 22 du porte-satellites 5, parallèles à l'axe D. Ces cannelures 22 permettent le coulissement axial des disques 15 relativement au porte-satellites 5.

L'empilement de disques 14, 15 peut être serré sélectivement par un mécanisme monté sur l'arbre central 6. Ce mécanisme comprend un poussoir de serrage 17 en forme de plaque, des ressorts de rappel 29 (dont un seul est représenté), répartis autour de l'arbre 6, des masselottes centrifuges 31 et un support de masselottes 30. Le support 30 est lié rigidement à l'arbre central 6, tandis que le poussoir de serrage 17, interposé axialement entre le support 30 et l'empilement de disques 14, 15, est lié en rotation à cet arbre 6, mais avec liberté de coulissement axial.

La périphérie de la surface du poussoir de serrage 17 est en contact avec le disque 14 ou 15 (15 dans l'exemple) formant une extrémité de l'empilement, tandis que le disque formant l'autre extrémité de l'empilement est en contact avec le porte-satellites 5. Ainsi, lorsque le poussoir de serrage 17 est poussé axialement vers le porte-satellites 5 avec une force suffisante, l'empilement de disques 14, 15 est serré et la couronne 7 et le porte-satellites 5 sont accouplés. Les ressorts de rappel 29 sont montés entre le porte-satellites 5 et le poussoir de serrage 17. La force exercée par ces ressorts 29 tend à pousser axialement le poussoir de serrage 17 en l'éloignant du porte-satellites 5, et donc à desserrer l'empilement de disques 14, 15.

Chaque masselotte 31 a un bec 33 dont une région ayant une composante de déplacement axial est appuyée contre le poussoir 17. Le bec 33 a une fonction de came définissant l'écartement du poussoir 17 par rapport au support 30, qui est fixe axialement par rapport au porte-satellites 5. Par ailleurs, les masselottes 31 sont entraînées en rotation à la vitesse de la sortie 2 et appliquent donc au poussoir 17, à partir du moment où la force des ressorts 29 est vaincue, une poussée qui est une fonction monotone croissante de la vitesse de rotation de la sortie 2.

Pour une vitesse de rotation nulle ou faible du porte-satellites 5 et de son arbre 6, les masselottes 31 occupent, sous l'action des ressorts 29 repoussant le poussoir 17, la position de repos représentée à la partie supérieure de la figure 1, au fond de leurs fentes respectives 32. Lorsque cette vitesse de rotation augmente, les masselottes 31 s'écartent de leur position de repos sous l'action de la force centrifuge. Les becs 33 des masselottes étant retenus par un rebord 36 formé à la périphérie du poussoir 17, les masselottes 31 pivotent comme représenté à la partie inférieure de la figure 1. Du fait de ce pivotement, les becs 33, dont la région appuyée sur le poussoir 17 a une composante de déplacement axial, écartent axialement le poussoir 17 du support 30. Comme le support 30 est lié rigidement à l'arbre central 6, le poussoir de serrage 17 est poussé vers le porte-satellites 5, à l'encontre des ressorts de rappel 29.

Ainsi, à partir d'une certaine vitesse de rotation du porte-satellites 5, la force centrifuge qui prend naissance dans les masselottes 31 permet à celles-ci de se soulever (comme représenté en bas de la figure 1) et de pousser le poussoir 17 contre l'empilement de disques à l'encontre de l'action des ressorts de rappel 29.

La différence entre la force axiale produite par les masselottes 31 sur le poussoir 17 et la force contraire produite sur le même poussoir 17 par les ressorts 29 constitue une force de serrage de l'empilement de disques 14, 15.

En fonction du couple auquel est soumis l'arbre d'entrée 1, cette force de serrage va être suffisante ou au contraire insuffisante pour solidariser le porte-satellites 5 avec la couronne 7 du train épicycloïdal. Si le couple sur l'arbre d'entrée 1 est relativement faible par rapport à la vitesse de rotation de la sortie 2, la force de serrage sera suffisante, et le porte-satellites 5 sera solidarisé avec la couronne 7. Dans cette situation, les satellites 4 ne peuvent plus rouler sur la couronne 7, et par conséquent ne peuvent plus tourner sur eux-mêmes autour de leur axe E. Par conséquent, les satellites 4 ne roulent pas non plus sur le planétaire 3. Il y a donc solidarisation en rotation entre l'arbre 1 et le porte-satellites 5, et par conséquent prise directe entre l'arbre d'entrée 1 et la sortie 2 de la transmission.

Si au contraire le couple présent sur l'arbre d'entrée 1 est relativement élevé par rapport à la vitesse de rotation du porte-satellites 5, la force de serrage appliquée à l'empilement de disques 14, 15 est insuffisante pour solidariser la couronne 7 et le porte-satellites 5. Dans ce cas, comme le porte-satellites 5 tend à rester immobile sous l'action de la charge à entraîner par la sortie 2, les satellites 4 tendent à se comporter en inverseurs de mouvement, c'est-à-dire à faire tourner la couronne 7 en sens inverse de la rotation de l'arbre 1. Mais ceci est empêché par la roue libre 8, de sorte que la couronne 7 est alors immobile par rapport au boîtier 9, et le porte-satellites 5 prend une vitesse de rotation qui est intermédiaire entre la vitesse de l'arbre d'entrée 1 et la vitesse nulle de la couronne 7. Dans ce cas, la transmission fonctionne en réducteur de vitesse.

Entre ces deux situations, il y a une situation intermédiaire, dans laquelle le couple sur l'arbre d'entrée 1 a une valeur que l'on peut qualifier de moyenne par rapport à la vitesse de rotation du porte-satellites 5. Ceci correspond à une certaine plage de valeurs de couple sur l'arbre 1 pour une vitesse de rotation donnée du porte-satellites 5, et à une plage de vitesses de rotation du porte-satellites 5 pour chaque valeur de couple sur l'arbre 1. Dans cette situation, l'embrayage 14, 15 tend à conserver l'état dans lequel il se trouve, c'est-à-dire à rester à l'état d'adhérence lorsqu'il est à l'état d'adhérence, et à rester à l'état de patinage lorsqu'il est à l'état de patinage.

Ceci est un avantage de la transmission car ainsi on évite les changements de vitesse répétés lorsque le véhicule évolue au voisinage des conditions correspondant au changement de rapport.

D'un autre côté, on souhaite en général que la transmission, lorsqu'elle change de rapport, le fasse de manière relativement rapide (sans brutalité) et avec le moins de frottement possible entre les disques, car le frottement est générateur de pertes mécaniques, d'échauffement et d'usure.

Par ailleurs encore, on souhaite, dans certaines conditions, que la transmission provoque un changement de rapport rapide au moment d'un brusque changement de la valeur du couple à transmettre. En particulier, lors des dépassements, si la transmission fonctionne en prise directe, on souhaite qu'elle passe instantanément à son fonctionnement en réducteur pour augmenter aussi vite que possible le couple disponible sur la sortie 2.

Conformément à l'invention, pour atteindre ce but, on applique dans les moyens de serrage de l'embrayage, par l'intermédiaire de moyens initiateurs 120, une impulsion de force dans le sens correspondant au changement d'état souhaité de l'embrayage.

Dans l'exemple représenté à la figure 1, l'arbre 6 est supporté en rotation relativement au boîtier 9 par un palier 121 comprenant une bague extérieure 122 qui est fixée au boîtier 9. Pour réaliser les moyens initiateurs 120, cette bague extérieure 122 réalisée en matière ferromagnétique est prolongée par un collet cylindrique 123 dirigé vers le support 30 et autour duquel est enroulé un bobinage 124 ayant pour axe l'axe D. La bague 122 est également réalisée d'une seule pièce avec une collerette ferromagnétique 126, formant pièce polaire, et ayant une face polaire 127.

Lorsque les masselottes 31 sont dans la position de repos représentée en haut de la figure 1, un bord arrière 128 des masselottes se trouve en regard de la face polaire 127.

Au contraire, lorsque les masselottes 31 sont dans la position de travail représentée en bas de la figure 1, le bord 128 des masselottes est décalé radialement vers l'extérieur par rapport à la face polaire 127.

Ainsi, lorsque l'enroulement 124 est alimenté électriquement, il crée dans le collet 123 et la pièce polaire 126 un champ magnétique et ceci fait apparaître sur la face polaire 127 un pôle Nord ou Sud selon la réalisation. Dans ce cas, les masselottes 31, réalisées elles aussi en matière ferromagnétique, si elles sont dans la position de travail représentée en bas de la figure 1, sont attirées par la face polaire 127 vers la position de repos représentée en haut de la figure 1.

Pour l'alimentation de l'enroulement 124, on a relié celui-ci à la batterie d'accumulateurs 129 du véhicule, en série avec un interrupteur 131. Celui-ci est normalement ouvert. Il est toutefois fermé pendant un court instant, par exemple 1 ou 2 secondes, lorsque le conducteur du véhicule appuie fortement sur l'accélérateur 132 et ferme ainsi un contact 133. La fermeture de ce contact fait parvenir la tension de la batterie 129 aux bornes d'entrée 134 d'un relais 136 commandant l'interrupteur 131. Le relais 136 est d'un type qui actionne l'interrupteur 131 à la fermeture pendant le temps voulu (une à deux secondes dans l'exemple) lorsqu'on lui applique un front montant de tension sur ses entrées 134.

Ainsi, lorsque le conducteur appuie fortement sur la pédale d'accélérateur 132, le relais 136 ferme pendant une ou deux secondes l'interrupteur 131 et l'enroulement 124 est alimenté pendant une ou deux secondes. Si à ce moment les masselottes 31 sont en position de travail et font fonctionner l'embrayage en état d'adhérence, les masselottes 31 sont soumises à une force magnétique tendant à les ramener en position de repos. Si cette force magnétique suffit à réduire suffisamment le serrage de l'embrayage pour que le couple à transmettre (qui de son côté a augmenté en raison de l'enfoncement de la pédale d'accélérateur) provoque le patinage de l'embrayage 14, 15, alors la transmission passe automatiquement sur son rapport inférieur correspondant à un fonctionnement en réducteur et le couple disponible sur la sortie 2 est augmenté.

L'ensemble est conçu pour que la force magnétique tendant à ramener les masselottes 31 en position de repos ne suffise pas à desserrer l'embrayage lorsque la vitesse de rotation de la sortie 2 est telle que le fonctionnement en réducteur provoquerait une vitesse de rotation excessive de l'arbre d'entrée 1.

On a représenté dans la moitié supérieure de la figure 1 une variante dans laquelle une butée axiale 137 est montée entre la couronne 7 et le poussoir 17.

De manière classique, les dentures du pignon planétaire 3 des satellites 4 et de la couronne 7 sont de type hélicoïdal. Cela est classique pour supprimer le bruit de fonctionnement des engrenages. On sait que les dentures hélicoïdales produisent, lorsqu'elles travaillent, une poussée axiale sur les pièces portant ces dentures. Par conséquent, la couronne 7, lors du fonctionnement en réducteur, produit une poussée axiale F_{AC} qui est transmise au poussoir 17 par la butée 137 et qui est proportionnelle au couple sur l'arbre d'entrée 1. Par conséquent, plus le couple sur l'arbre d'entrée 1 est élevé et plus la vitesse de rotation du porte-satellites 5 devra être élevée pour que la poussée axiale exercée par les masselottes 31 sur le poussoir 17 arrive à vaincre non seulement la force de rappel des ressorts 29 mais en outre la poussée axiale F_{AC} produite par la denture hélicoïdale de la couronne 7. La force axiale F_{AC} constitue donc, lors du fonctionnement en réducteur, une composante qui croit de manière monotone en fonction du couple sur l'arbre 1 et qui se soustrait à la composante d'origine centrifuge créée par les masselottes 31, et qui est monotone croissante en fonction de la vitesse. Ainsi, lorsque le couple est élevé, on décale vers les vitesses plus élevées le passage du rapport inférieur au rapport supérieur dans la transmission, comme cela est souhaité pour la conduite des véhicules automobiles.

Par contre, lorsque l'embrayage est serré, aucun effort n'est transmis entre la denture des satellites 4 et celle de la couronne 7, et par conséquent la réaction axiale F_{AC} disparaît. C'est-à-dire qu'une fois le rapport supérieur enclenché, il faudra une nette diminution de la vitesse de rotation ou une nette augmentation du couple sur l'arbre 1 pour que la transmission repasse à son rapport inférieur. Dès que la transmission est repassée à son rapport inférieur, la force axiale F_{AC} réapparaît et par conséquent stabilise le fonctionnement sur le rapport inférieur.

En d'autres termes, à chaque changement d'état de l'embrayage, la force axiale F_{AC} varie dans le sens stabilisant le rapport de transmission venant d'être mis en service.

Avec ce perfectionnement, le procédé d'initiation impulsionnel des changements d'état selon l'invention est particulièrement avantageux. Pour provoquer un changement d'état, il suffit en effet de l'initier par une impulsion de force sur les moyens de serrage et une fois que le changement a eu lieu, la poussée axiale F_{AC} stabilise le changement de rapport qui vient d'être effectué.

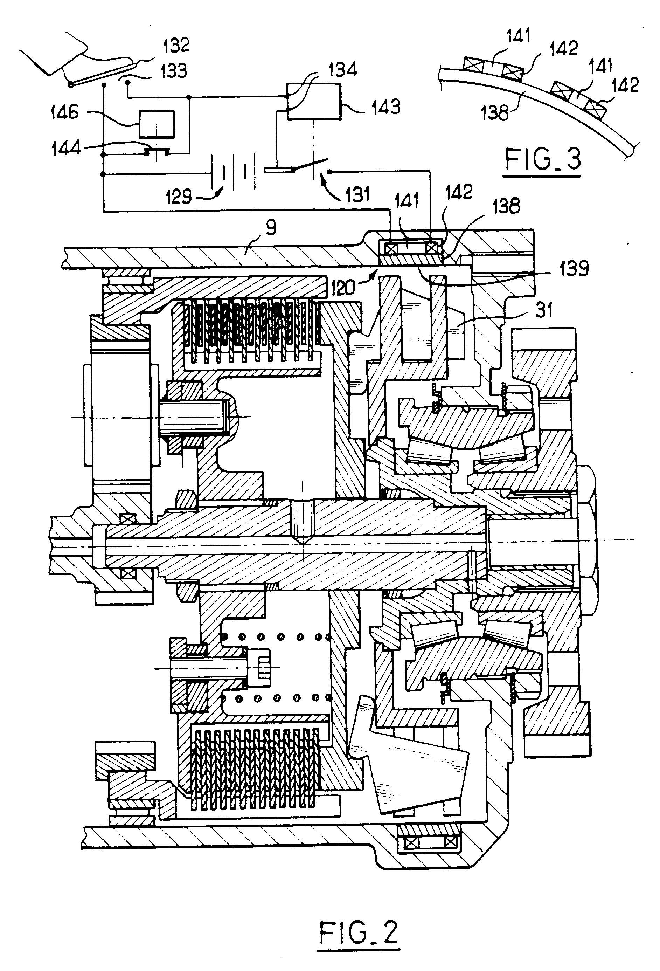

L'exemple des figures 2 et 3 ne sera décrit qu'en ce qui concerne ses différences par rapport à celui de la figure 1.

A la place de l'enroulement 124 et de la pièce polaire 126, on a prévu une pièce polaire annulaire 138 qui est fixée au boîtier 9 autour de l'ensemble des masselottes 31 et dont la face radialement intérieure, de forme générale cylindrique, constitue une face polaire 139 capable d'attirer les masselottes 31 radialement vers l'extérieur pour les faire passer de la position de repos représentée en haut de la figure 3 à la position de travail représentée en bas de la figure 3.

Pour créer le champ magnétique nécessaire dans la pièce polaire 138, celle-ci porte sur sa face radialement extérieure, opposée à la face polaire 139, des noyaux 141 répartis angulairement autour de l'axe D et autour de chacun desquels est formé un bobinage 142.

Le relais 136 de la figure 1 est remplacé par un relais 143 qui provoque une brève fermeture de l'interrupteur 131 lorsqu'il reçoit un front de tension descendant sur ses entrées 134. Le contact 133 de l'accélérateur 132 est monté en parallèle avec un contact 144 qui est normalement fermé mais qui s'ouvre lorsqu'un dispositif tachymétrique 146 relève que la vitesse de rotation de la sortie 2 est inférieure à un certain seuil.

Ainsi, un front de tension descendant arrive aux entrées 134 du relais 143 lorsque l'un ou l'autre des contacts 133 et 144 s'ouvre alors que l'autre est déjà ouvert. Cette situation se produit par exemple lorsque la vitesse tombe en dessous du seuil prédéterminé du dispositif tachymétrique 146 alors que le conducteur n'appuie que faiblement sur la pédale d'accélérateur 132. Dans ce cas, l'interrupteur 131 est brièvement fermé et si les masselottes 31 sont dans la situation représentée en haut de la figure 2, elles vont être attirées radialement vers l'extérieur et par conséquent tendre à passer dans la position représentée en bas de la figure 2, ou encore, si elles sont initialement dans la position du bas de la figure 2, être attirées plus fortement dans cette position, ce qui va augmenter la force de serrage dans l'empilement de disques et, si l'état d'adhérence n'est pas encore réalisé entre eux, réaliser l'état d'adhérence et par conséquent la prise directe dans la transmission.

Si le couple sur l'arbre 1 est trop élevé pour que l'état d'adhérence se réalise malgré le surcroît de serrage assuré par l'impulsion de force électromagnétique, c'est que le passage au rapport supérieur n'est pas souhaitable et la transmission continue avantageusement de fonctionner en réducteur malgré l'impulsion électromagnétique.

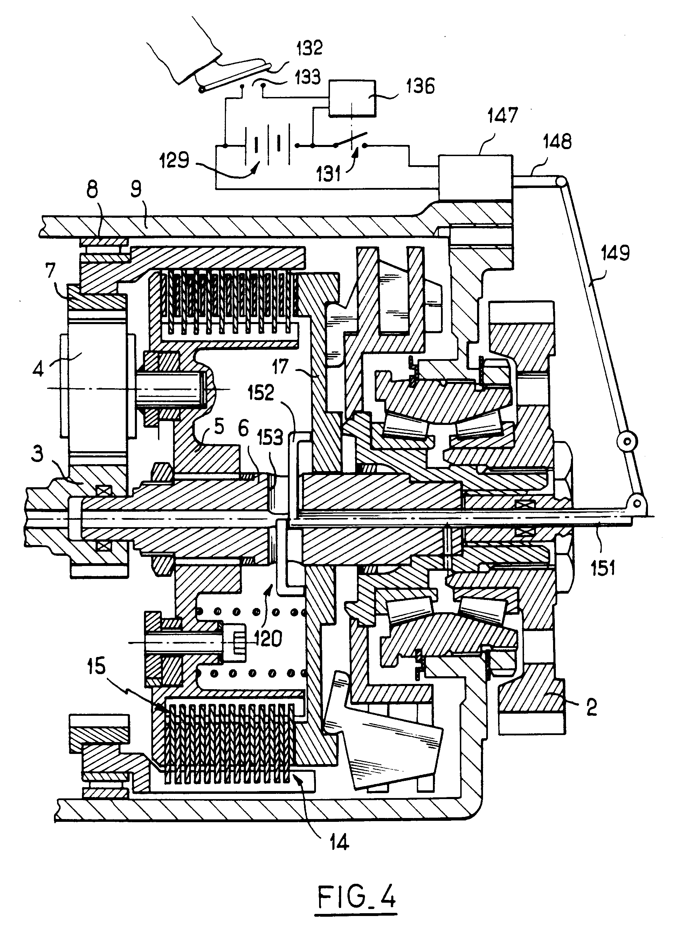

L'exemple représenté à la figure 4 ne sera décrit qu'en ce qui concerne ses différences par rapport à celui de la figure 1.

Le montage électrique est le même qu'à la figure 1 mais ce montage alimente par impulsion non plus un électroaimant agissant sur les masselottes, mais un électroaimant 147 agissant sur un noyau plongeur 148 lequel commande par l'intermédiaire d'un levier inverseur 149 une tige de traction 151 mobile axialement à l'intérieur de l'arbre 6. La tige 151 comporte des bras radiaux 152 qui sortent radialement de l'arbre 6 par des lumières 153 de ce dernier pour s'appuyer sur le poussoir 17 et solliciter celui-ci dans le sens du desserrage de l'empilement de disques 14, 15 lorsque l'électroaimant 147 est alimenté.

Par conséquent, lorsque l'électroaimant 147 est alimenté, le poussoir 17 subit une impulsion de force dans le sens du desserrage de l'embrayage et permet le passage du fonctionnement en prise directe au fonctionnement en réducteur dans les mêmes conditions que cela a été décrit à propos de l'électroaimant 123, 124, 126 de la figure 1.

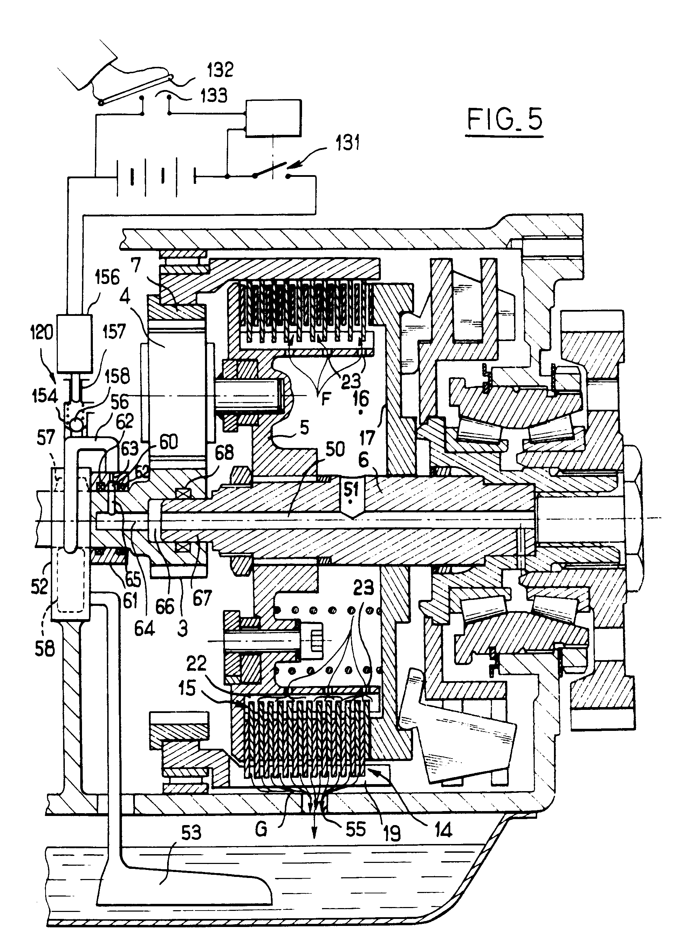

Dans l'exemple de la figure 5, on utilise une pression hydraulique pour créer une impulsion de force.

Le porte-satellites 5 et le poussoir 17 en forme de plaque définissent entre-eux une chambre 16 qui est traversée axialement par l'arbre 6 et qui est fermée périphériquement par l'empilement de disques 14, 15.

L'arbre central 6 comporte un conduit axial 50 et au moins un alésage radial 51 situé à l'endroit où l'arbre central 6 traverse la chambre 16. L'alésage radial 51 s'étend entre la paroi latérale du conduit axial 50 et la chambre 16. Le conduit 50 et l'alésage 51 servent pour injecter de l'huile dans la chambre 16. L'huile ainsi injectée emplit la chambre 16 en s'y écoulant comme l'indiquent schématiquement les flèches F, et elle en sort par des orifices 23 dans les fonds de cannelures 22 ou par l'extrémité axiale libre des cannelures 22, puis par des passages définis par des rainures non représentées prévues en direction sensiblement radiale dans les faces de friction de certains au moins des disques 14 ou 15. Lorsque les disques patinent, l'huile présente dans ces rainures enduit la face de friction adjacente appartenant au disque adjacent, et ceci lubrifie le contact de friction. Ensuite, cette huile passe dans le boîtier 9 à l'extérieur de la couronne 7 à travers le fond ouvert des cannelures 18, comme l'indiquent les flèches G. De là, l'huile retombe dans un carter inférieur 54 par une ouverture 55 du boîtier 9.

Pour alimenter en huile la chambre 16 par l'intermédiaire du conduit 50, on peut prévoir une pompe 52, par exemple à engrenages 57, 58. Dans l'exemple représenté à la figure 5, un collecteur d'huile 53 prélève de l'huile dans le carter inférieur 54. La pompe 52 aspire l'huile recueillie par le collecteur 53 et l'injecte sous pression dans une tubulure de sortie 56. La pompe 52 est entraînée par l'arbre d'entrée 1 de la transmission (l'un des engrenages 57 de la pompe 52 est monté sur l'arbre 1).

La tubulure de sortie 56 de la pompe 52 est raccordée à une chambre annulaire 60 usinée sur la paroi intérieure d'une bague fixe 61 dans laquelle l'arbre d'entrée 1 est monté pivotant. Deux joints 62 assurent l'étanchéité entre l'arbre d'entrée 1 et la bague 61 de part et d'autre de la chambre annulaire 60. Un orifice radial 63 s'étend dans la bague 61 entre la chambre annulaire 60 et le point de raccordement de la tubulure 56 pour admettre l'huile sous pression dans la chambre 60.

Un conduit axial 64 est prévu au voisinage de l'extrémité de l'arbre d'entrée 1 adjacente au planétaire 3. Le conduit axial 64 communique avec la chambre annulaire 60 de la bague 61 par un alésage radial 65. Le conduit axial 64 débouche dans un évidement cylindrique 66 présent à l'extrémité de l'arbre d'entrée 1, au niveau du planétaire 3. L'évidement cylindrique 66 reçoit avec liberté de rotation, un prolongement cylindrique 67 de l'arbre central 6, dans lequel se termine le conduit axial 50 de l'arbre 6. Un joint annulaire 68 assure l'étanchéité entre l'évidement 66 et le prolongement 67.

Ainsi, l'huile sous pression sortant de la pompe 52 parvient à la chambre d'huile 16 de l'embrayage multidisques en passant successivement par la tubulure 56, l'orifice radial 63, la chambre annulaire 60, l'alésage radial 65, le conduit axial 64 de l'arbre d'entrée 1, le conduit axial 50 de l'arbre central 6, et l'alésage radial 51.

Il est en outre prévu un clapet de décharge 154 relié à la tubulure de sortie 56 de la pompe 52. Ce clapet limite normalement la pression fournie par la pompe 52 à la chambre 16 à une valeur de pression prédéterminée.

Un électroaimant 156 à noyau plongeur 157 est monté pour permettre l'ouverture du clapet 154 lorsqu'il n'est pas alimenté, et pour que le noyau plongeur 157 vienne bloquer la bille obturatrice 158 en position de fermeture lorsque l'électroaimant 156 est alimenté. L'électroaimant 156 est relié à un circuit électrique identique à celui de la figure 1, de sorte qu'il est alimenté par une impulsion de une à deux secondes lorsque l'utilisateur presse fortement la pédale d'accélérateur 132. Dans ces conditions, le clapet de décharge 154 ne peut plus s'ouvrir, de sorte que la pompe 52 fournit à la chambre 16 une pression plus élevée pendant le temps d'activation de l'électroaimant 156. Cette pression plus élevée pendant une courte durée s'exerce sur le poussoir 17 et produit donc sur celui-ci une impulsion de force dans le sens du desserrage de l'empilement de disques 14, 15.

En variante, l'agencement avec la butée 137 de la figure 1 pour faire intervenir une poussée axiale variable dans les forces de serrage de l'empilement de disques est applicable aux réalisations des figures 2 à 5.

On pourrait également appliquer l'invention à un embrayage dont les moyens de serrage ne feraient intervenir aucune force centrifuge, mais par exemple uniquement une poussée axiale provenant d'un engrènement de dentures hélicoïdales.

## Revendications

1. Procédé de commande pour initier un changement d'état entre un état de patinage et un état d'adhérence dans un embrayage (14, 15) commandé automatiquement par des moyens de serrage (17, 31) appliquant un effort de serrage variable en fonction d'au moins un paramètre caractérisé en ce qu'on modifie passagèrement l'effort de serrage variable appliqué à l'embrayage, en lui appliquant en outre une brève impulsion de force dans un sens correspondant audit changement d'état, de façon à initier un changement durable dudit état de l'embrayage.

2. Dispositif de transmission à changement de rapport automatique à au moins deux rapports de transmission, comprenant un embrayage d'accouplement sélectif (14, 15) faisant fonctionner le dispositif de transmission avec un rapport de transmission différent selon que l'embrayage d'accouplement est dans un état de patinage et respectivement dans un état d'adhérence, et des moyens de serrage (17, 31) appliquant à l'embrayage un effort de serrage variable en fonction d'un paramètre pour commander l'embrayage entre l'état de patinage et l'état d'adhérence, de façon à changer le rapport de transmission lorsque le paramètre franchit une plage de valeurs, caractérisé par des moyens initiateurs (120) pour sélectivement modifier l'effort de serrage variable appliqué à l'embrayage en lui impartissant en outre une brève impulsion de force dans un sens déterminé pour initier un changement durable d'état de l'embrayage entre l'état de patinage et l'état d'adhérence.

3. Dispositif selon la revendication 2, caractérisé en ce que les moyens de serrage comprennent un poussoir de transmission d'effort (17) qui transmet à l'embrayage (14, 15) un effort qui est fonction de la valeur du paramètre, et en ce que les moyens initiateurs (152, 52) appliquent l'impulsion au poussoir.

4. Dispositif selon la revendication 2, caractérisé en ce que les moyens initiateurs (52) sont du type à pression de fluide.

5. Dispositif selon la revendication 2, caractérisé en ce que les moyens initiateurs comprennent une liaison mécanique (149, 151, 152) entre un moyen moteur (147, 148) et un poussoir (17) mobile axialement pour serrer l'embrayage de manière variable.

6. Dispositif selon la revendication 5, caractérisé en ce que la liaison mécanique (151) passe par un arbre central (6) de la transmission pour atteindre le poussoir (17) à travers une ouverture latérale (153) de cet arbre (6).

7. Dispositif selon la revendication 2, dans lequel les moyens de serrage comprennent des masselottes pivotantes (31) ayant une région (33) qui a une composante de déplacement axial, caractérisé en ce que les moyens pour impartir une impulsion comprennent un poussoir (17) appuyé sur lesdites régions (33) des masselottes (31) et associé à des moyens d'application d'effort (152, 52).

8. Dispositif de transmission selon la revendication 2, caractérisé en ce que les moyens initiateurs comprennent un électro-aimant (123, 124 ; 138, 141 ; 147 ; 156) et des moyens (131, 136, 143) pour fournir une impulsion électrique à l'électro-aimant.

9. Dispositif de transmission selon la revendication 8, caractérisé en ce que les moyens de serrage comprennent des masselottes centrifuges (31) au moins partiellement réalisées en matière ferromagnétique, et en ce que l'électro-aimant a une face polaire (127, 139) voisine d'une région ferromagnétique des masselottes.

10. Dispositif de transmission selon l'une des revendications 8 ou 9, caractérisé en ce que la face polaire (127) est formée sur une bague extérieure (122) de palier à roulement (121), autour de laquelle est bobiné un enroulement (124) de l'électro-aimant.

11. Dispositif de transmission selon la revendication 9, caractérisé en ce que l'électro-aimant comprend un anneau métallique (139) portant sur une face des noyaux (141) entourés par des bobinages (142) répartis angulairement autour de l'axe de rotation par rapport auquel les masselottes (31) sont soumises à la force centrifuge.

12. Dispositif de transmission selon l'une des revendications 2 à 11, caractérisé en ce que les moyens de serrage appliquent un effort de serrage qui varie de manière sensiblement continue et monotone sur au moins une plage de variation du paramètre.

13. Dispositif de transmission selon l'une des revendications 2 à 12, caractérisé en ce que l'effort variable appliqué à l'embrayage par les moyens de serrage comprend une force de réaction (F_{AC}) qui, lors du changement de rapport de transmission, varie dans le sens stabilisant le rapport de transmission venant d'être activé.

14. Dispositif de transmission selon la revendication 13, caractérisé en ce que la force de réaction (F_{AC}) à laquelle l'embrayage est soumis est une force de réaction axiale produite par une denture hélicoïdale d'une combinaison d'engrenages (3, 4, 7) qui est différemment activée selon que l'embrayage est à l'état d'adhérence ou à l'état de patinage.

15. Dispositif de transmission selon l'une des revendications 13 ou 14, caractérisé en ce que l'effort variable appliqué à l'embrayage par les moyens de serrage comprend la force de réaction (F_{AC}), tendant à commander l'embrayage dans le sens du passage à un rapport correspondant à une relativement grande vitesse de l'entrée (1), et une force d'origine centrifuge tendant à commander l'embrayage dans le sens du passage à un rapport correspondant à une relativement faible vitesse de l'entrée.

## Claims

1. A control method for initiating a change of condition between a slip condition and a grip condition in a clutch (14, 15) automatically controlled by clamping means (17, 31) applying a clamping thrust which varies as a function of at least one parameter, characterised in that the clamping thrust applied to the clutch is temporarily modified by additionally applying thereto a brief thrust pulse in a direction corresponding to said change of condition, thereby to initiate a durable change of said condition of the clutch.

2. An automatically shifted transmission device having at least two transmission ratios, comprising a selective coupling clutch (14,15) causing operation of the transmission device with a different transmission ratio according to whether the coupling clutch is in a slipping condition and respectively in a gripping condition, and clamping means (17, 31) applying to said clutch a clamping thrust which varies as a function of a parameter for controlling the clutch between the slipping condition and the gripping condition thereby to change the transmission ratio when the parameter varies through a range of magnitude, characterised by initiator means (120) for selectively modifying the variable clamping thrust applied to the clutch by moreover applying thereto a brief thrust pulse in a determined direction for initiating a durable change of condition of the clutch between the slip condition and the grip condition.

3. A transmission device according to claim 2, characterised in that the clamping means comprise a force-transmitting pusher (17) which transmits to said clutch (14, 15) a force which is a function of the value of the parameter, and in that the initiator means (152, 52) apply the pulse to the pusher.

4. A transmission device according to claim 2, characterised in that the initiator means (52) are of the fluid-pressure type.

5. A transmission device according to claim 2, characterised in that the initiator means comprise a mechanical coupling (149, 151, 152) between a power means (147, 148) and a pusher (17) which is axially movable for variably clamping the clutch.

6. A transmission device according to claim 5, characterised in that the mechanical coupling (151) extends through a central shaft (6) of the transmission for reaching the pusher (17) through a side opening (153) of said central shaft (6).

7. A transmission device according to claim 2, in which the clamping means comprise pivotal weights (31) having a portion (33) which has an axial component of displacement, characterised in that the means for applying a pulse comprise a pusher (17) engaging said portions (33) of the weights (31) and operating in conjunction with force applying means (152, 52).

8. A transmission device according to claim 2, characterised in that the initiator means comprise an electromagnet (123, 124 ; 138, 141 ; 156) and means (131, 136, 143) for supplying the electromagnet with an electric pulse.

9. A transmission device according to claim 8, characterised in that the clamping means comprise centrifugal weights (31) which are at least in part made of ferromagnetic material, and in that the electromagnet has a polar face (127, 139) in the vicinity of a ferromagnetic portion of the weights.

10. A transmission device according to anyone of claims 8 or 9, characterised in that the polar face (127) is formed on an external race (122) of a roll bearing (121), wherein a coil (124) of the electromagnet is wound around the external race.

11. A transmission device according to claim 9, characterised in that the electromagnet comprises a metal ring (139) provided on one face with cores (141) surrounded by coils (142) angularly distributed about the axis of rotation with respect to which the weights (31) are subjected to a centrifugal force.

12. A transmission device according to anyone of claims 2-11, characterised in that the clamping means apply a clamping thrust which varies substantially continuously and monotonously across a range at least of the variation of the parameter.

13. A transmission device according to anyone of claims 2-12, characterised in that the variable force applied to the clutch by the clamping means comprises a reaction force (F_{AC}) which, during a transmission ratio change, varies in the direction stabilising the transmission ratio just activated.

14. A transmission device according to claim 13, characterised in that the reaction force (F_{AC}) to which the clutch is subjected is an axial reaction force produced by helical teeth of a combination of gears (3, 4, 7) which is differently activated according to whether the clutch is in the grip condition or the slip condition.

15. A transmission device according to claim 13 or 14, characterised in that the variable thrust applied to the clutch by the clamping means comprises said reaction force (F_{AC}), tending to control the clutch in the direction of shifting into a ratio corresponding to a relatively high speed of input (1), and a force having a centrifugal origin, tending to control the clutch in the direction of shifting into a ratio corresponding to a relatively low speed of input (1).

## Patentansprüche

1. Steuerverfahren zum Einleiten eines Zustandswechsels zwischen dem ausgerückten Zustand (Schlupfzustand) und dem eingerückten Zustand (Haftzustand) einer Kupplung (14, 15), die automatisch durch Druckmittel (17, 31) gesteuert wird, die eine Druckkraft aufbringen, die in Abhängigkeit von zumindest einem Parameter veränderlich ist, dadurch gekennzeichnet, daß die auf die Kupplung aufgebrachte variable Druckkraft vorübergehend modifiziert wird, indem dieser ein kurzer Kraftimpuls mit einem Vorzeichen überlagert wird, das dem genannten Zustandswechsel entspricht, in einer Weise um einem dauerhaften Wechsel dem genannten Zustandes der Kupplung herzustellen.

2. Automatikgetriebe mit mindestens zwei Gängen, mit einer Kupplung (14, 15) zum selektiven Kuppeln, um das Getriebe in einem unterschiedlichen Gang zu betreiben, je nach dem, ob sich die Kupplung im ausgerückten Zustand (Schlupfzustand) oder im eingerückten Zustand (Haftzustand) befindet, und mit Druckmitteln (17, 31), die auf die Kupplung eine Druckkraft aufbringen, die in Abhängigkeit von einem Parameter veränderlich ist, um die Kupplung zwischen dem Schlupfzustand und dem Haftzustand hin und her zu schalten, um den eingelegten Gang des Getriebes zu wechseln, wenn der Parameter einen Wertebereich durchläuft, gekennzeichnet durch Initialmittel (120) zum selektiven Verändern der auf die Kupplung aufgebrachten Druckkraft, indem dieser darüber hinaus ein kurzer Kraftimpuls in einer festgelegten Richtung mitgeteilt wird, um einen dauerhaften Zustandswechsel der Kupplung zwischen dem Schlupfzustand und dem Haftzustand einzuleiten.

3. Getriebe nach Anspruch 2, dadurch gekennzeichnet, daß die Druckmittel einen Druckstößel (Druckring 17) aufweisen, der auf die Kupplung (14, 15) eine Kraft überträgt, die eine Funktion des Werts des Parameters ist, und daß die Initialmittel (152, 52) den Impuls auf den Druckstößel aufbringen.

4. Getriebe nach Anspruch 2, dadurch gekennzeichnet, daß die Initialmittel (52) vom Flüssigkeitsdruck-Typ sind.

5. Getriebe nach Anspruch 2, dadurch gekennzeichnet, daß die Initialmittel eine mechanische Verbindung (149, 151, 152) zwischen einem Motormittel (147, 148) und einem axial beweglichen Druckstößel (Druckring 17) aufweisen, um in veränderlicher Weise auf die Kupplung zu drücken.

6. Getriebe nach Anspruch 5, dadurch gekennzeichnet, daß die mechanische Verbindung (151) durch eine zentrale Welle (6) des Getriebes verläuft, um den Druckstößel (17) über eine Querbohrung (153) in dieser Welle (6) zu erreichen.

7. Getriebe nach Anspruch 2, bei dem die Druckmittel schwenkbare Fliehgewichte (31) mit jeweils einem Bereich (33) aufweisen, der eine axiale Bewegungskomponente hat, dadurch gekennzeichnet, daß die Mittel zum Erteilen eines Impulses einen Druckstößel (Druckring 17) aufweisen, der von den genannten Bereichen (33) der Fliehgewichte (31) kraftbeaufschlagt wird und mit Kraftaufbringungsmitteln (152, 52) verbunden ist.

8. Getriebe nach Anspruch 2, dadurch gekennzeichnet, daß die Initialmittel einen Elektromagneten (123,124;138,141;147;156) und Mittel (131,136,143) zum Bereitstellen eines elektrischen Impulses für den Elektromagneten aufweisen.

9. Getriebe nach Anspruch 8, dadurch gekennzeichnet, daß die Druckmittel Fliehgewichte (31) aufweisen, die zumindest teilweise aus einem ferromagnetischen Material bestehen, und daß der Elektromagnet eine Polfläche (127,139) benachbart eines ferromagnetischen Bereiches der Fliehgewichte aufweist.

10. Getriebe nach einem der Ansprüche 8 oder 9, dadurch gekennzeichnet, daß die Polfläche (127) auf einem Außenring (122) eines Wälzlagers (121) ausgebildet ist, um das herum eine Wicklung (124) des Elektromagneten gewickelt ist.

11. Getriebe nach Anspruch 9, dadurch gekennzeichnet, daß der Elektromagnet einen Metallring (139) aufweist, der auf einer Fläche Kerne (141) trägt, die von Spulen (142) umgeben sind, die winkelmäßig um die Rotationsachse unterteilt sind, um die die Fliehgewichte (131) der Fliehkraft unterworfen werden.

12. Getriebe nach einem der Ansprüche 2 bis 11, dadurch gekennzeichnet, daß die Druckmittel eine Druckkraft aufbringen, die zumindest über einen Parameterbereich hinweg in im wesentlichen stetiger und monotoner Weise veränderlich ist.

13. Getriebe nach einem der Ansprüche 2 bis 12, dadurch gekennzeichnet, daß die variable, auf die Kupplung durch die Druckmittel aufgebrachte Kraft eine Reaktionskraft (F_{AC}) umfaßt, die sich beim Gangwechsel mit dem Sinn verändert, daß der aktivierte Gang stabilisiert wird.

14. Getriebe nach Anspruch 13, dadurch gekennzeichnet, daß die Reaktionskraft (F_{AC}), der die Kupplung unterworfen wird, eine axiale Reaktionskraft ist, die durch eine schraubenförmige Verzahnung in Form einer Kombination verschiedener Zahnräder (3,4,7) erzeugt wird, die unterschiedlich aktiviert wird, je nach dem, ob die Kupplung im Haftzustand oder im Schlupfzustand ist.

15. Getriebe nach einem der Ansprüche 13 oder 14, dadurch gekennzeichnet, daß die von den Druckmitteln auf die Kupplung aufgebrachte veränderliche Kraft die Reaktionskraft (F_{AC}) umfaßt, die die Kupplung in einem Sinn zu schalten trachtet, daß ein Gang eingelegt wird, der einer relativ großen Geschwindigkeit des Getriebeeingangs (1) entspricht, und eine Zentrifugalkraft, die danach trachtet, die Kupplung so zu schalten, daß ein Übergang zu einem Gang stattfindet, der einer relativ geringen Geschwindigkeit des Getriebeeingangs entspricht.
